Europäisches Patentamt

(19) European Patent Office

Office européen des brevets

(11) Veröffentlichungsnummer: **0 106 235**
**B1**

(12) **EUROPÄISCHE PATENTSCHRIFT**

(45) Veröffentlichungstag der Patentschrift:
21.08.85

(51) Int. Cl.⁴: **C 09 C 1/00, C 09 C 3/06**

(21) Anmeldenummer: **83109735.7**

(22) Anmeldetag: **29.09.83**

(54) **Verfahren zur Herstellung von mit Metalloxid beschichteten Effektpigmenten.**

(30) Priorität: **08.10.82 DE 3237264**

(43) Veröffentlichungstag der Anmeldung:
**25.04.84 Patentblatt 84/17**

(45) Bekanntmachung des Hinweises auf die Patenterteilung:
**21.08.85 Patentblatt 85/34**

(84) Benannte Vertragsstaaten:
**DE FR GB IT NL**

(56) Entgegenhaltungen:
EP - A - 0 045 851
DE - A - 2 454 138
US - A - 3 582 382

**DERWENT JAPANESE PATENTS REPORT, Band S, Nr. 49, 18. Januar 1972, Seite 2, Section G, Zusammenfassung Nr. 39696S, Derwent Publications, London, GB**
**DERWENT JAPANESE PATENTS REPORT, Band S, Nr. 51, 1. Februar 1972, Seite 3, Section G, Zusammenfassung Nr. 39696S, Derwent Publications, London, GB**

(73) Patentinhaber: **BASF Aktiengesellschaft, Carl-Bosch-Strasse 38, D-6700 Ludwigshafen (DE)**

(72) Erfinder: **Ostertag, Werner, Dr., Oberer-Bergel-Weg 2, D-6718 Gruenstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von mit Metalloxid beschichteten Effektpigmenten.

Effektpigmente auf der Basis von mit Metalloxiden beschichteten Glimmerschuppen sind als »Perlglanzpigmente« bekannt. Im Idealfall bestehen diese Pigmente aus planaren sehr dünnen Muskovitscheibchen, die mit einem gleichmäßigen Metalloxidfilm überzogen sind. In Lacken und in Kunststoffen zeigen diese Pigmente interessante optische Effekte: sie verleihen den Färbungen hohen Glanz und ein perlmuttartiges Aussehen. Das optische Verhalten dieser Perlglanzpigmente wird überwiegend durch Reflexion und Interferenz bestimmt. Die Pigmentteilchen haben in der Regel Durchmesser von 5 bis 30 μm und sind 0,1 bis 0,5 μm dick (DE-AS 1 467 468, DE-OS 2 106 613, 2 522 572, 1 959 998 und 2 244 298; US-PS 4 146 403 und 3 087 828).

Unter den Metalloxid-Beschichtungen von Glimmerschuppen haben Beschichtungen mit $TiO_2$ größte Bedeutung. Es sind jedoch auch Beschichtungen mit anderen Oxiden, z. B. mit $ZrO_2$, $V_2O_5$ oder $Cr_2O_3$ bekannt. Für die optische Wirkung der Perlglanzpigmente ist entscheidend, daß die Beschichtung ein Metalloxid mit einer hohen Brechzahl ist. Das Interesse an Rutil- ($n = 2,7$), Anatas- ($n = 2,4$) oder $ZrO_2$- ($n = 2,4$)Beschichtungen ist daher erklärlich, denn die Belegung mit hoch brechenden Materialien macht Glimmerschuppen in Kunststoffen oder in Lacken überhaupt erst sichtbar. Nichtbelegte Glimmerplättchen zeigen in diesen Medien keinen Perlglanzeffekt, da Glimmer ($n = 1,5-1,6$) eine Brechzahl aufweist, die der der Kunststoffe und Lacke ($n = 1,6$) sehr ähnlich ist.

Für die Herstellung von dünnen Metalloxid-Beschichtungen — insbesondere von $TiO_2$-Beschichtungen — sind zwei grundsätzlich unterschiedliche Verfahren bekannt:

a) Beschichtung mit Hilfe der Gasphasen-Reaktion zwischen $TiCl_4$- und $H_2O$-Dampf und

b) Beschichtung durch Auffällung von $TiO_2$-Aquat in wäßrigem Medium. In der Technik hat nur das letztere Verfahren praktische Bedeutung erlangt.

Es ist zwar bekannt, daß bei der Gasphasenreaktion nahezu unerreicht gleichmäßige und gut haftende Beschichtungen erhalten werden. Unter den Pigmentherstellern gelten jedoch Beschichtungsverfahren in der Gasphase als nicht geeignet, weil sie technisch zu kompliziert sind. Aus diesem Grund hat sich in der Vergangenheit praktisch keiner der Pigmenthersteller mit Beschichtungen in der Gasphase beschäftigt.

In der US-PS 3 582 382 wird ein Verfahren zur Herstellung von mit $TiO_2$ beschichteten Glimmern beschrieben. Hierbei wird das Glimmersubstrat durch ein beheiztes geneigtes Drehrohr bewegt und gleichzeitig $TiCl_4$-Dampf und feuchte Luft im Drehrohr in Gegenwart des Glimmersubstrats zur Reaktion gebracht. Das durch Hydrolyse entstehende $TiO_2$ belegt dabei die zugänglichen Oberflächen des Glimmers. Ein Nachteil des Verfahrens ist, daß auf diese Weise nur ein Teil der Blättchen beschichtet wird, da die mit Glimmerplättchen abgedeckten Blättchen unbeschichtet bleiben. Zudem ist das Verfahren äußerst langwierig. Zur Herstellung dickerer Beläge muß das Glimmermaterial mehrmals durch das Drehrohr gefahren werden.

Weiterhin ist aus der DE-OS 24 54 138 ein Verfahren zur Gasphasenbelegung von ca. 10 μm großen isometrischen $Al_2O_3$-Partikeln bekannt. Hierbei wird das zu beschichtende Pulver in einer auf 200°C temperierten Wirbelschicht mit $TiCl_4$- und $H_2O$-Dampf behandelt. Man erhält mit $TiO_2$ beschichtetes $Al_2O_3$, das zur Herstellung von bestimmten Typen von elektrolytischen Kondensatoren Verwendung findet. Das Wirbelbett wird bei der Beschichtung vibriert.

Das aus der DE-OS 2 454 138 bekannte Verfahren kann nicht zur Herstellung von Effektpigmenten verwendet werden, da es nicht möglich ist, die nur 0,1 bis 0,5 μm dicken Glimmersubstrate im Wirbelbett in einer Weise zu fluidisieren, daß bei der Reaktion in der Gasphase eine allseitige Belegung erzielt wird. Versuche zeigen, daß sich die feinen Glimmerpartikel im Wirbelbett agglomerieren und daß dementsprechend bei der Gasphasenbeschichtung die Agglomerate und nicht die diskreten Einzelteilchen belegt werden. Auch die Einrichtung eines vibrierenden Wirbelbetts, bei dem die Fluidisierung des Wirbelguts im Wirbelbett durch Vibration unterstützt wird, führt zu keinem Erfolg. Abgesehen davon ist die Errichtung von vibrierten Wirbelbetten im Produktionsmaßstab sicher mit erheblichen Schwierigkeiten und hohem Aufwand verbunden.

Vor diesem Hintergrund ist verständlich, daß zur technischen Herstellung von Perlglanzpigmenten bisher ausschließlich Beschichtungsverfahren in flüssigem Medium angewendet werden. Hierbei wird im Falle von mit $TiO_2$ beschichteten Pigmenten z. B. so vorgegangen: Glimmerschuppen ausgewählter Teilchengröße werden in Flüssigkeit, meist Wasser, eingetragen. In dieser Suspension werden gelöste Titanverbindungen durch vorsichtige und kontrollierte Hydrolyse zersetzt. Unter bestimmten Bedingungen gelingt es, Titanhydroxid bzw. Titandioxidaquat auf die suspendierten Glimmerplättchen aufzufällen. Nach der Beschichtung wird das überzogene Pigment filtriert, gewaschen, getrocknet und getempert. Beim Tempern wird das $TiO_2$-Aquat in wasserfreies $TiO_2$ überführt.

Inhärente Probleme beim Naßverfahren zur Herstellung von Perlglanzpigmenten sind die mangelhafte Haftfestigkeit der Beschichtung und eine nur durch besondere Maßnahmen zu erzielende Homogenität der Beschichtung. Eine der Ursachen der Schwierigkeiten liegt darin, daß bei der Beschichtung zunächst ein voluminöser Hydroxid-Niederschlag auf der Glimmeroberfläche abgeschieden wird, der sich dann erst während der späteren Trocknungs- und Temperstufe unter erheblichem Masseverlust zu der $TiO_2$-Beschichtung formiert.

Es versteht sich von selbst, daß sich ablösende $TiO_2$-Schichten zu einem Verlust in den optischen Eigenschaften des Pigmentes führen, was dem Anwender der Pigmente erhebliche Schwierigkeiten bereitet.

Nach Ansicht der Pigmentfachleute wäre es erstrebenswert, die hohe Qualität der durch Gasphasenreaktion erhaltenen Oberflächenbelegung auch bei der Herstellung von Perlglanzpigmenten zu erreichen.

Aufgabe der vorliegenden Erfindung war es, ein Verfahren zur Verfügung zu stellen, das eine Gasphasenbeschichtung von plättchenförmigen Pigmentsubstraten von Teilchengrößen < 30 μm im Wirbelbett ermöglicht und das nicht zu beschichteten Agglomeraten oder ungleichmäßig beschichteten Substraten führt. Ein Vibrieren des Wirbelbettes sollte wegen der zu erwartenden Schwierigkeit bei der technischen Durchführung vermieden werden.

Diese Aufgabe wird durch das Verfahren der vorliegenden Erfindung gelöst. Es wurde gefunden, daß man mit mindestens einem Metalloxid beschichtete Effektpigmente in der Wärme durch Belegung von im Wirbelbett fluidisierten Teilchen mit Hilfe einer Reaktion zwischen einem oder mehreren Metallchloriden und Wasser in der Gasphase erhält, wenn man als zu fluidisierendes Pigmentsubstrat plättchenförmige Teilchen verwendet, von denen 10 bis 90 Gew.-% einen größten Durchmesser von ≥ 60 μm und der Rest einen größten Durchmesser von ≤ 30 μm aufweisen.

Überraschend war, daß sich bei dem Gemisch im Wirbelbett die großen Partikel nicht von den wesentlich feinteiligeren Teilchen separieren. Aufgrund des Verhaltens von isometrischen Teilchen mit stark unterschiedlichen Teilchengrößen im Wirbelbett — hier tritt eine Separierung der Teilchen nach der Größe ein — war zu erwarten, daß ebenfalls eine Auftrennung eintreten würde.

Überraschenderweise bewirken die großen über das gesamte Wirbelbett gleichmäßig verteilten Teilchen eine vollständige Fluidisierung der feinen Teilchen und verhindern sicher eine Agglomerisation der feinen Teilchen.

Die großen Partikel können nach der Beschichtung von den gewünschten feinen Pigmentteilchen durch Sieben leicht abgetrennt werden.

Die nach dem Verfahren erhaltenen Effektpigmente dienen zum Färben von Lacken, Kunststoffen, von kosmetischen Produkten und von Gläsern. Die nach dem erfindungsgemäßen Verfahren aufgebrachten Überzüge haften sehr fest auf dem plättchenförmigen Substrat, so daß bei der Einarbeitung in Lacken oder Kunststoffen keine besonderen Vorsichtsmaßnahmen getroffen werden brauchen.

Wie elektronenmikroskopische Aufnahmen zeigen, entstehen bei der erfindungsgemäßen Gasphasenbeschichtung z. B. mit $TiCl_4$ sehr gleichförmige $TiO_2$-Beläge. Im Gegensatz zu den Beschichtungsverfahren in der Flüssigphase zeigen die Beläge größere physikalische Homogenität und praktisch keine insularen Beschichtungsbezirke.

Ein weiterer Vorteil des erfindungsgemäßen Verfahrens ist, daß die Beschichtung nicht wasserhaltig amorph, sondern in der entwässerten Form kristallin anfällt.

Die kontrollierte Belegung der Pigmentsubstrate mit einem oder mehreren Oxiden durch Reaktion in der Gasphase, wobei die Belegung gleichzeitig oder nacheinander erfolgen kann, ist ein wesentlicher Vorteil des erfindungsgemäßen Verfahrens gegenüber den Beschichtungsverfahren in flüssigem Medium nach dem Stand der Technik. Bei diesen ist das Fällverhalten der Hydroxide teilweise stark voneinander verschieden. Außerdem hängt das Fällverhalten stark von der Ionenkonzentration der betreffenden Elemente ab.

Wird die Herstellung der $TiO_2$-belegten Produkte bei 250° ± 50°C vorgenommen, so haben die $TiO_2$-Beschichtungen Anatas-Struktur. Durch Tempern der Pigmente bei Temperaturen > 500°C, z. B. bei bis zu 1200°C, läßt sich eine Rutilisierung der Anatas-Beläge erreichen.

Das erfindungsgemäße Verfahren wird im allgemeinen so durchgeführt, daß man plättchenförmige Teilchen der gewünschten Teilchengröße, die in der Regel bei ≤ 30 μm liegt, mit größeren plättchenförmigen Teilchen, deren größter Durchmesser ungefähr 60 bis 400 μm und deren Anteil im Gemisch mindestens 10 Gew.-% beträgt, mischt und die Mischung in eine beheizbare Wirbelapparatur gibt. Das Wirbelbett wird über einen Sieb- oder Frittenboden durch Einblasen und/oder Umwälzen von Luft, Stickstoff, anderen inerten Gasen oder Gemischen davon erzeugt. Die Gase werden je nach der Wärmebilanz vorher erwärmt oder gekühlt. Dem Wirbelgas wird für die Umsetzung Wasserdampf zugemischt. Über eine seitlich über dem Gasverteilerboden des Wirbelreaktors angebrachten Düse werden die Metallchlorid-Dämpfe unverdünnt oder verdünnt mit einem Trägergas in die Wirbelschicht eingebracht. Das über ein Filter oder einen Zyklon austretende HCl-haltige Abgas wird über eine NaOH-Wäsche gefahren und von HCl befreit. Die Reaktionszeit richtet sich nach der gewünschten Beschichtungsdicke. Wenn diese erreicht ist, wird das Produkt aus dem Reaktor abgelassen und das beschichtete Produkt durch Sieben in die gewünschten Fraktionen aufgetrennt.

Die Temperatur des Wirbelbettes liegt, damit kein $H_2O$-Dampf kondensiert, oberhalb 100°C, zweckmäßigerweise bei Temperaturen von 200 bis 300°C. Bei Temperaturen über 200°C verläuft die Hydrolyse in der Gasphase genügend rasch, so daß eine vollständige Überführung der Chloride in die Oxide bereits bei Betthöhen von nur 50 cm erfolgt.

Hinsichtlich der Menge des zugefahrenen Wasserdampfes hat es sich als vorteilhaft erwiesen, eine deutlich oberhalb der stöchiometrisch notwendigen $H_2O$-Menge anzuwenden, z. B. das 2- bis 20fache der stöchiometrisch erforderlichen Menge.

Als plättchenförmige Teilchen für die Effektpigmente kommen solche mit größtem Durchmesser von $\leq 30\ \mu m$ in Betracht. Bevorzugt sind Teilchen von 3 bis 30 $\mu m$ größtem Durchmesser, insbesondere solche von 5 bis 25 $\mu m$ Durchmesser. Vorzugsweise weisen diese Teilchen Schichtdicken von ungefähr 0,1 bis ca. 0,5 $\mu m$ auf.

Zur Verhinderung der Bildung von Agglomeraten werden den feinen Teilchen größere plättchenförmige Teilchen des gleichen Materials von etwa 60 bis 400 $\mu m$, vorzugsweise von etwa 90 bis 150 $\mu m$ größtem Durchmesser zugegeben. Der Anteil dieser größeren Teilchen beträgt 10 bis zu 90 Gew.-%, bezogen auf das Gemisch. Bevorzugt sind Gemische, die 20 bis 60 Gew.-% an den größeren Teilchen aufweisen. Als plättchenförmige Teilchen sind Glimmerschuppen bevorzugt.

Die Temperatur der Wirbelschicht liegt zweckmäßigerweise bei 200 bis 500°C, vorzugsweise bei 220 bis 260°C.

Als für die Reaktion mit Wasserdampf in der Gasphase und für die Beschichtung zu Effektpigmenten geeignete Chloride kommen z. B. in Betracht: Titan-IV-chlorid, Zinn-IV-chlorid und Eisen-III-chlorid.

Unter den für die Reaktion in der Gasphase geeigneten flüchtigen Metallchloriden hat $TiCl_4$ mit Abstand die größte Bedeutung. Neben $TiCl_4$ können gleichzeitig oder anschließend weitere flüchtige Chloride in das Wirbelbett eingeführt werden, z. B. $SiCl_4$, $AlCl_3$. So kann z. B. das optische Aussehen von mit $TiO_2$-beschichteten Effektpigmenten durch eine anschließende Gasphasenreaktion mit $SiCl_4$, das dabei in $SiO_2$ überführt wird, etwas variiert werden. Andererseits kann die Rutilisierung der $TiO_2$-Beschichtung durch aus $SnCl_4$ in der Gasphasenreaktion abgeschiedenes $SnO_2$ bei der Temperung bekanntlich beschleunigt werden.

Die Menge des in der Zeiteinheit in das Wirbelbett eingebrachten Chloriddampfes kann innerhalb eines weiten Bereichs variieren. Es ist jedoch vorteilhaft, so zu verfahren, daß die Menge der in das Wirbelbett eingeführten Chloride 10 Volumenprozent, bezogen auf das Volumen der anderen eingeführten Gase, nicht überschreitet.

Nach dem erfindungsgemäßen Verfahren können auch Belegungen in mehr als einer Schicht durchgeführt werden, wobei die Schichten aus dem gleichen Oxid oder aus verschiedenen Oxiden bestehen können.

Nach dem Verfahren können Glasplättchen, z. B. sog. Flake-Glas, mittlerer Teilchendurchmesser 0,4 mm, z. B. mit $TiO_2$ oder $TiO_2/SnO_2$ durch Reaktion von $TiCl_4$ oder von $TiCl_4$ und $SnCl_4$ mit Wasser in der Gasphase belegt werden. Die so beschichteten Glasplättchen haben wegen ihrer Größe als Pigmente wenig Interesse.

In der anorganischen Pigmentchemie ist das Aufbringen von solchen Überzügen weit verbreitet, da hierdurch die Pigmentformen stabilisiert werden können. Der überwiegende Anteil aller im Handel befindlichen anorganischen Pigmente ist durch Überzüge stabilisiert. Es wurde bei Versuchen festgestellt, daß sich nach dem Verfahren gemäß der vorliegenden Erfindung auch solche für die Stabilisierung bekannten Oxide als Überzüge aufbringen lassen. So kann z. B. auf eine erste Beschichtung aus $TiO_2$, $TiO_2 + SnO_2$ oder $TiO_2 + SiO_2$ eine weitere Schicht aus $Al_2O_3$, $SiO_2$ und/oder $P_2O_5$ durch Dampfphasenreaktion von $Al_2Cl_6$, $SiCl_4$ oder $PCl_3$ aufgebracht werden, wobei dieser Vorgang wiederholt werden kann.

Die Beläge aus $Al_2O_3$, $SiO_2$ und/oder $P_2O_5$ können in analoger Weise aufgebracht werden wie die $TiO_2$-Beschichtung.

Außer der Stabilisierung mit farblosem $TiO_2$, transparentem $Al_2O_3$ oder $SiO_2$ können auch Oberflächenbeschichtungen mit farbigen Oxiden vorgenommen werden. So lassen sich nach dem erfindungsgemäßen Verfahren, z. B. mit $TiO_2$-belegte Glimmerschuppenpigmente zusätzlich mit einer Eisenoxidschicht überziehen, die mit Hilfe einer Gasphasenreaktion zwischen Eisenchlorid und Wasser aufgebracht werden kann. Vorteilhafter erfolgt jedoch die Belegung durch Oxidation von Eisenpentacarbonyldampf nach der in der EP-A 45 851 beschriebenen Weise. Darüber hinaus läßt sich durch Tempern bei Temperaturen von 400 bis 1200°C eine Verbindungsbildung zwischen der $TiO_2$-Schicht und der $Fe_2O_3$-Schicht herbeiführen, die zu einer goldgeld gefärbten Belegung führt.

Die folgenden Beispiele sollen das erfindungsgemäße Verfahren zusätzlich erläutern.

I. Wirbelapparatur

Für die Ausführungsbeispiele wurde als Wirbelapparatur ein beheiztes Quarzrohr von 65 mm $\varnothing$ verwendet, das unten eine Quarzfritte als Boden enthält. Durch die Quarzfritte wird das Wirbelgas zusammen mit dem für die Reaktion erforderlichen Wasserdampf in das Wirbelbett geleitet. Oberhalb der Fritte befindet sich eine Zweistoffdüse, die seitlich in den Wirbelraum führt, für die Zuführung der gasförmigen Chloride, gegebenenfalls zusammen mit einem inerten Gas als Träger. Die Chloride werden über die Innendüse zugeführt. Durch die äußere Düse wird in der Regel Stickstoff oder Luft in das Wirbelbett geblasen.

Beispiel 1

In die unter I beschriebene Wirbelapparatur werden 150 g weißer Glimmer (Muskovit) mit einem mittleren Plättchendurchmesser von 15 $\mu m$ (Teilchengrößen 1 bis 32 $\mu m$; erhalten durch Naßmahlen von Glimmer und Passieren durch

ein 32 μm Sieb) und 150 g Glimmer mit einem Plättchendurchmesser zwischen 63 und 125 μm (erhalten durch Naßmahlen, der feinere und gröbere Anteil wurde abgesiebt) eingefüllt und mit 250 l/h (Normalbedingungen) Luft, die auf 200°C vorgeheizt wird, gewirbelt. Das Wirbelgut wird anschließend mit Hilfe der am Wirbelbett außen angebrachten Heizung auf 250°C erhitzt. Der Wirbelluft werden, nachdem das Wirbelgut auf 250°C erwärmt ist, 65 g/h Wasserdampf zugegeben.

In einem Verdampfer wird dann eine Mischung aus 99% TiCl₄ und 1% SiCl₄ gleichmäßig verdampft. Mengenfluß: 8 ml/h.

Die Chlorid-Dämpfe werden mit einem Stickstoffstrom (100 l/h, Normalbedingungen) über die Innendüse der Zweistoffdüse in die Wirbelschicht eingetragen. Über die äußere Begleitdüse werden gleichzeitig 150 l/h Stickstoff eingedüst.

Die Reaktion wird 4,5 Stunden bei 250°C durchgeführt. Anschließend wird 1 Stunde unter sonst gleichen Bedingungen reines SiCl₄ (8 ml/h) in die Wirbelschicht eingetragen.

Die wahrend der Reaktion freiwerdenden Abgase werden durch ein Filter geleitet und mit Natronlauge gewaschen.

Nach Beendigung des Versuchs wird abgekühlt. Das Produkt wird dem Reaktor entnommen und die Grobfraktion durch Sieben von der gewünschten Feinfraktion < 32 μm getrennt. Das Produkt enthält 4,0 Gew.-% Titan.

Aus den Aufnahmen mit dem Rasterelektronenmikroskop geht hervor, daß die Glimmerplättchen eine dünne Schicht aus TiO₂ und SiO₂ aufweisen. Nach dem Anreiben in Alkyd/Melaminharzlack (DIN-Entwurf 53 238) und Abrakeln der Dispersion auf einer Unterlage erhält man einen Überzug mit bläulichen Glanz und dem typischen optischen Verhalten von Perlglanzpigmenten.

## Beispiel 2

In die unter I beschriebene Wirbelapparatur werden 300 g weißer Glimmer (Plättchendurchmesser der Einzelpartikel zwischen 5 und 90 μm; Anteil der Teilchen mit einem Plättchendurchmesser < 63 μm : 45 Gew.-% (bestimmt durch Sieben)) eingefüllt und mit 350 l/h (Normalbedingungen) Wirbelgas, welches auf 200°C erhitzt wird, gewirbelt.

Das Wirbelgas besteht aus 250 l/h Stickstoff und 100 l/h Luft. Anschließend wird das Wirbelgut auf 210°C erhitzt. Dem Wirbelgas werden 18 g/h Wasserdampf zugesetzt. Über die Innendüse werden dann 8 ml/h TiCl₄-Dampf vermischt und 150 l Trägerstickstoff und 150 l/h Stickstoff Über die Außendüse ins Wirbelblatt eingeführt.

Nach 10 Stunden wird der Versuch beendet, das Produkt wird dem Reaktor entnommen und bei 1000°C eine Stunde lang calciniert. Anschließend wird das Pigment durch Sieben (Teilchengröße < 30 μm) abgetrennt.

Nach der chemischen Analyse enthält das gewünschte Pigment 9,1 Gew.-% Ti. Nach den Röntgenaufnahmen liegt das TiO₂ in der Rutilform vor. In Lack erhält man Überzüge, die typisches Perlglanzverhalten zeigen.

## Beispiel 3

Glimmer wird zunächst nach dem in Beispiel 2 beschriebenen Verfahren mit Titandioxid belegt. Nach beendeter TiO₂-Beschichtung wird das Pigment im beheizten Reaktor belassen und mit der in Beispiel 2 angegebenen Wirbelgasmenge weiterhin gewirbelt. Über die Zweistoffdüse wird nun 1 Stunde lang ein Gemisch aus Eisenpentacarbonyldampf und Stickstoff ins Bett eingetragen. Der Eisenpentacarbonyldampf wird in einem Verdampfer erzeugt, dem 10 g/h Eisenpentacarbonyl gleichmäßig zugeführt werden. Der Carbonyldampf wird zusammen mit 100 l/h (Normalbedingungen) Stickstoff durch die Innendüse der Zweistoffdüse ins Wirbelbett eingetragen. Über die Außendüse werden weitere 100 l/h N₂ eingeblasen. Nach dem Abkühlen wird das Wirbelgut ausgetragen und das Pigment ( = Anteil < 30 μm) durch Sieben abgetrennt wird.

Nach der Analyse enthält das Produkt 9 Gew.-% Ti und 1,1 Gew.-% Fe. Der Eisenoxidanteil verleiht dem Effektpigment ein bräunlichgelbes Aussehen. Im übrigen hat das Produkt das typische Aussehen eines Perlglanzpigmentes.

Der bräunlich gelbe Farbton des Pigments kann durch 1stündiges Tempern des Pigments in einen gelberen umgewandelt werden. Nach Röntgenaufnahmen ist diese Farbveränderung auf die Bildung einer Verbindung zwischen Fe₂O₃ und TiO₂ zurückzuführen.

## Beispiel 4

In der unter I beschriebenen Wirbelapparatur, in der jedoch oberhalb der Fritte seitlich zwei Zweistoffdüsen eingelassen sind, werden 150 g naßgemahlener und durch ein Sieb mit 32 μm Maschenweite passierter Glimmer zusammen mit weiteren 50 g naßgemahlenem Glimmer mit einem Plättchendurchmesser von 70—125 μm eingefüllt und mit 300 l/h (Normalbedingungen) Luft-Stickstoff-Gemisch (1 : 1) gewirbelt. Die Temperatur des Wirbelbettes wird auf 250°C angehoben und bei dieser Temperatur 50 g/h H₂O zur Wirbelluft gegeben. Parallel dazu werden gleichzeitig über die eine Düse TiCl₄-Dampf und über die andere Düse Eisenpentacarbonyldampf kontinuierlich ins Wirbelbett eingeführt. Mengen: 33 ml/h flüssiges TiCl₄ und 20 ml/h flüssiges Fe(CO)₅. Der Chlorid- und Carbonyldampf wird mit je 100 l/h (Normalbedingungen) Stickstoff als Träger durch die zentrale Duse der Zweistoffdüsen eingeblasen. Gleichzeitig werden durch jede der äußeren Düse 100 l/h Stickstoff eingeblasen.

Nach 1¼ Stunden wird die TiCl₄- und Fe(CO)₅-Zufuhr beendet. Dann wird AlCl₃-Dampf in einer Menge von 30 g/h mit Hilfe von 100 l/h Träger-Stickstoff 10 Minuten lang ins Wirbelbett eingeführt.

Anschließend wird abgekühlt. Das beschichtete Produkt wird dem Reaktor entnommen. Das Pigment wird durch Sieben mit einem Sieb mit 32 μm Maschenweite von dem gröberen Anteil abgetrennt.

Das Pigment wird 1 h bei 1100°C getempert. Aus den Röntgenaufnahmen geht hervor, daß beim Tempern die Struktur des Pseudorutils entsteht; d. h. aus $TiO_2$ und $Fe_2O_3$ ist eine Verbindung entstanden. Das Perlglanzpigment hat einen goldgelben Farbton und zeigt in Kunststoffen hohe Temperaturstabilität, einen hohen Glanz und typischen Perlglanzeffekt.

## Patentansprüche

1. Verfahren zur Herstellung von mit mindestens einem Metalloxid beschichteten Effektpigmenten, durch Belegung von im Wirbelbett fluidisierten Teilchen in der Wärme mit Hilfe einer Reaktion zwischen einem oder mehreren Metallchloriden und Wasser in der Gasphase, dadurch gekennzeichnet, daß man als zu fluidisierendes Pigmentsubstrat plättchenförmige Teilchen verwendet, von denen 10 bis 90 Gew.-% einen größten Durchmesser von $\geq 60$ μm und der Rest einen größten Durchmesser von $\leq 30$ μm aufweisen.

2. Verfahren nach Anspruch 1, dadurch gekennzeichnet, daß als Pigmentsubstrat Glimmerschuppen verwendet werden.

3. Verfahren nach Anspruch 1 oder 2, dadurch gekennzeichnet, daß man als Metallchlorid Titan-IV-chlorid oder ein Gemisch verwendet, das überwiegend aus Titan-IV-chlorid besteht.

4. Verfahren gemäß Anspruch 1, 2 oder 3, dadurch gekennzeichnet, daß die Belegung des Pigmentsubstrats mit einem Gemisch aus Metallchlorid und Metallcarbonyl in Gegenwart von Wasser und von Sauerstoff erfolgt.

5. Verfahren gemäß Anspruch 1, 2, 3 oder 4, dadurch gekennzeichnet, daß das Pigmentsubstrat ein- oder mehrfach mit den gleichen oder verschiedenen Oxiden belegt wird.

6. Verfahren gemäß Anspruch 5, dadurch gekennzeichnet, daß das mit Metalloxid beschichtete Substrat anschließend durch Reaktion von Aluminiumchlorid, Silicium-IV-chlorid und/oder Phosphortrichlorid in der Gasphase mit Wasser und gegebenenfalls Sauerstoff zusätzlich mit Aluminiumoxid, Siliciumoxid und/oder Phosphorpentoxid belegt wird.

7. Verfahren gemäß Anspruch 3 und 5, dadurch gekennzeichnet, daß das zuerst mit Titandioxid beschichtete Substrat anschließend durch Reaktion von Eisenpentacarbonyl und Luft in der Gasphase mit Eisen-III-oxid belegt wird.

8. Verfahren gemäß Anspruch 1 bis 7, dadurch gekennzeichnet, daß die erhaltenen Verfahrensprodukte einer thermischen Nachbehandlung bei Temperaturen von 400 bis 1200°C unterzogen werden.

9. Effektpigmente erhalten nach dem Verfahren gemäß den Ansprüchen 1 bis 8.

10. Verwendung der Effektpigmente gemäß Anspruch 9 zum Färben von Lacken, Kunststoffen, kosmetischen Produkten und Glas.

## Claims

1. A process for the preparation of an effect pigment coated with at least one metal oxide, by coating particles, fluidized in a fluidized bed, at elevated temperature with the aid of a reaction between one or more metal chlorides and water in the gas phase, wherein flaky particles, of which from 10 to 90% by weight have a longest dimension of $\geq 60$ μm and the remainder has a longest dimension of $\leq 30$ μm, are used as the pigment substrate to be fluidized.

2. A process as claimed in claim 1, where in mica flakes are used as the pigment substrate.

3. A process as claimed in claim 1 or 2, wherein the metal chloride used is titanium(IV) chloride or a mixture consisting predominantly of titanium(IV) chloride.

4. A process as claimed in claim 1, 2 or 3, wherein the pigment substrate is coated with a mixture of a metal chloride and a metal carbonyl in the presence of water and oxygen.

5. A process as claimed in claim 1, 2, 3 or 4, wherein the pigment substrate is coated once or several times with the same metal chloride or with different metal chlorides.

6. A process as claimed in claim 5, where in the substrate coated with metal oxide is then additionally coated with aluminum oxide, silicon dioxide, phosphorus pentoxide or a mixture of these oxides by reaction of aluminum chloride, silicon(IV) chloride, phosphorus trichloride or a mixture of these chlorides in the gas phase with water, in the presence or absence of oxygen.

7. A process as claimed in claims 3 and 5, wherein the substrate coated first with titanium dioxide and water is then coated with iron(III) oxide by reaction of iron pentacarbonyl and air, in the gas phase.

8. A process as claimed in claims 1 to 7, wherein the product obtained by the process is subjected to a thermal aftertreatment at from 400 to 1200°C.

9. An effect pigment obtained by a process as claimed in claims 1 to 8.

10. The use of an effect pigment prepared as claimed in claim 9 for coloring paints, lacquers and other surface coatings, plastics, cosmetic products and glass.

## Revendications

1. Procédé pour la fabrication de pigments à effet revêtus d'au moins un oxyde métallique, par enduction à la chaleur de particules fluidisées en couche turbulente au moyen d'une réaction entre un ou plusieurs chlorures métalliques et l'eau en phase gazeuse, caractérisé en ce qu'on utilise, en tant que substrat pigmentaire à fluidiser, des particules en paillettes dont 10 à 90% en poids présentent un diamètre maximal égal ou supérieur à 60 μm et le reste un diamètre maximal égal ou inférieur à 30 μm.

2. Procédé selon la revendication 1, caractérisé en ce que des paillettes de mica sont utilisées comme substrat pigmentaire.

3. Procédé selon la revendication 1 ou 2, caractérisé en ce qu'on utilise, en tant que chlorure métallique, le chlorure titanique ou un mélange qui se compose principalement de chlorure titanique.

4. Procédé selon l'une quelconque des revendications 1 à 3, caractérisé en ce que l'enduction du substrat pigmentaire est effectué avec un mélange de chlorure métallique et de carbonyle métallique, en présence d'eau et d'oxygène.

5. Procédé selon l'une quelconque des revendications 1 à 4, caractérisé en ce que le substrat pigmentaire est enduit une ou plusieurs fois avec le même oxyde ou des oxydes différents.

6. Procédé selon la revendication 5, caractérisé en ce que le substrat enduit d'oxyde métallique est ensuite enduit en plus d'oxyde d'aluminium, de bioxyde de silicium et/ou de pentoxyde de phosphore par réaction de chlorure d'aluminium, de chlorure de silicium-IV et/ou de trichlorure de phosphore en phase gazeuse avec l'eau et, le cas échéant, l'oxygène.

7. Procédé selon la revendication 3 ou 5, caractérisé en ce que le substrat, tout d'abord enduit d'oxyde titanique, est ensuite enduit d'oxyde ferrique par réaction de pentacarbonyle de fer et d'air en phase gazeuse.

8. Procédé selon l'une quelconque des revendications 1 à 7, caractérisé en ce que les produits obtenus par le procédé sont soumis à un post-traitement thermique à des températures de 400 à 1200° C.

9. Pigments à effet, obtenus par le procédé selon l'une quelconque des revendications 1 à 8.

10. Utilisation des pigments à effet selon la revendication 9 pour la coloration de peintures-émail, de matières plastiques, de produits cosmétiques et de verre.